# EUROPÄISCHE PATENTSCHRIFT

(11) **EP 0 655 357 B1**
(45) Veröffentlichungstag und Bekanntmachung des Hinweises auf die Patenterteilung: **06.05.1998**
(21) Anmeldenummer: 94111100.7
(22) Anmeldetag: 16.07.1994
(51) Int. Cl.: B60H 1/32

(54) **Heizungs-, Belüftungs und/oder Klimatisierungsvorrichtung**
Installation for heating, ventilating and/or air conditioning
Dispositif de chauffage, de ventilation et/ou de climatisation

(30) Priorität: 29.11.1993 DE 4340587
(43) Veröffentlichungstag der Anmeldung: 31.05.1995
(73) Patentinhaber: AURORA Konrad G. Schulz GmbH & Co, 69427 Mudau (DE)
(72) Erfinder: Wolf, Hannes, D-74722 Buchen (DE); Kern, Alfred, D-63936 Schneeberg (DE)
(74) Vertreter: Baronetzky, Klaus, Dipl.-Ing.

(56) Entgegenhaltungen:
- DE-C- 2 841 277
- GB-A- 1 335 633
- US-A- 4 592 207
- US-A- 5 263 893

## Beschreibung

Die Erfindung betrifft eine Heizungs-, Belüftungs- und/oder Klimatisierungsvorrichtung gemäß dem Oberbegriff von Anspruch 1.

Derartige Heizungs-, Belüftungs- und/oder Klimatisierungsvorrichtungen sind beispielsweise aus der DE-OS 28 41 277 bekannt geworden. Problem von Kabinendachheizern ist regelmäßig, daß zwar im Fußraum der häufig engen Kabine Platz gespart und ungenutzter Freiraum im Dach der Kabine ausgenutzt werden kann, dafür das Fahrzeug jedoch kopflastiger wird und die Dachkonstruktion insgesamt verstärkt werden muß, was konstruktive Nachteile bedingt.

Ein besonderes Problem bei der Verwendung von sogenannten Doppelradialgebläsen für die Dachheizer liegt darin begründet, daß Vorkehrungen getroffen werden müssen, um Resonanzen in der Tragstruktur des Gebläses zu verhindern. Resonanzschwingungen führen zu erheblichen Belastungen für die Befestigungselemente, beeinträchtigen die Dauerhaltbarkeit und erhöhen die Geräuschbildung durch den Dachheizer beträchtlich. Zur Vermeidung von Resonanzen ist man bei Dachheizern üblicherweise davon abgegangen, großvolumige Druckverteilräume zur Verfügung zu stellen, auch wenn an sich hierzu in den Dachseitenbereichen Platz wäre, sowie, eine erhebliche Stärke für die Tragplatte vorzusehen.

Das Fehlen eines Druckraums anschließend an das Gebläse führt jedoch zu ungleichmäßigen Strömungsverhältnissen und erfordert besondere Vorkehrungen, um, abgesehen von der Frontscheibe, auch die weiteren Scheiben, insbesondere die rückwärtige Scheibe mit Luft zum Defrosten zu beaufschlagen. Ein entsprechender Druckstutzen, der einen Druckverteilraum anschließend an das Gebläse vermeidet, ist in der DE-OS 28 41 277 vorgeschlagen worden.

Demgegenüber liegt der Erfindung die Aufgabe zugrunde, eine Heizungs-, Belüftungs- und/oder Klimatisierungsvorrichtung gemäß dem Oberbegriff von Anspruch 1 zu schaffen, die trotz vergleichsweise geringem Gewichts der Tragstruktur eine resonanzfreie Lagerung des Gebläses ermöglicht, wobei zugleich eine kostengünstige Herstellung möglich sein soll.

Diese Aufgabe wird erfindungsgemäß durch Anspruch 1 gelöst. Vorteilhafte Weiterbildungen ergeben sich aus den Unteransprüchen.

Die Erfindung zeichnet sich dadurch aus, daß die Tragstruktur, die das Gebläse, den Wärmetauscher sowie gegebenenfalls den Verdampfer aufnimmt und die zur Bereitstellung der Luftkanäle vorgesehen ist, als Tiefziehteil ausgebildet ist. In besonders wirksamer Weise werden zur Herstellung der Tragstruktur zwei miteinander verschweißbare Platten oder Folien in Doppeltiefziehtechnik behandelt, wobei die Platten oder Folien in einem Arbeitsgang tiefgezogen werden und sogleich miteinander verschweißt werden. In dieser Weise entstehen Berührungsbereiche und beabstandete Bereiche, wobei in den beabstandeten Bereichen Luftkanäle ausgebildet sind. Überraschend lassen sich mit dieser Technik trotz Materialeinsparung etwaige Resonanzen ausschalten oder zumindest stark vermindern. Die Festigkeit ist durch die zweischalige Bauweise stark erhöht und die Resonanzfrequenz so stark verschoben, daß keine Resonanzen bei den üblicherweise verwendeten Gebläsen zu befürchten wären.

Es versteht sich, daß eine weitere Schalldämmung durch die an sich bekannte Auskleidung mit Dämmaterial - etwa in Form einer Weichschaumschicht - vorgesehen sein kann. Diese kann sich zugleich als Stoßschutz an die untere Ebene der Tragstruktur anschließen.

In besonders günstiger Weise läßt sich die Erfindung in Verbindung mit einem Dachlüfter einsetzen, wie er bei Traktorkabinen oder sonstigen Kabinenfahrzeugen zum Einsatz kommt. Durch die Gewichtsreduktion aufgrund der trotz erhöhten Festigkeit leichteren Tragstruktur wird die Kopflastigkeit des betreffenden Fahrzeugs vermindert. Die Herstellkosten sind gegenüber der Verwendung separater Spritzgußteile, die dann noch montiert und gegeneinander abgedichtet werden müssen, bereits aufgrund der Herstellung in einem Arbeitsgang vermindert.

Mit der Erfindung läßt sich sogar eine Umschaltklappe zwischen Frischluft und Umluft in das Tiefziehteil integrieren. Hierzu ist eine Seite der Klappe durch das Tiefziehen als Filmscharnier ausgedünnt, die gegenüberliegende Seite als Sollbruchstelle ausgebildet.

Besonders günstig ist es auch, daß mit der zweischaligen Doppeltiefziehtechnik Rippen zur Luftführung oder zur Aussteifung besonders einfach herstellbar sind. Aufgrund der Zweischaligkeit wird die Geschlossenheit der sichtbaren Oberfläche sowie die Luftführung auf der der Rippe abgewandten Seite der Tragstruktur nicht beeinträchtigt.

Gemäß einer vorteilhaften Ausgestaltung ist es vorgesehen, die Luftverteilkanäle die oben offene B-Säule der Kabine umschließen zu lassen. Mit dieser Ausgestaltung ist es in einfacher Weise möglich, Heizluft dem Fußraum des Fahrers zuzuführen.

Zur weiteren Aussteifung und Verminderung von Resonanzschwingungen können einander zugewandete Vorsprünge zwischen den beiden Platten oder Folien, die das Tiefziehteil bilden, im Druckraum vorgesehen sein, wobei sich zugleich eine Aussteifung der Abstützung des Gebläses ergibt.

Es ist günstig, daß zusätzliche Funktionskomponenten wie Betätigungselemente für die Gebläseregelung, Luftumsteuerung usw., einschließlich der erforderlichen Düsen unmittelbar in das Tiefziehteil aufgenommen werden können. Auch besteht die Möglichkeit, an geeigneter Stelle beispielsweise Lautsprecher einzusetzen, wenn dies gewünscht ist.

Gemäß einer weiteren vorteilhaften Ausgestaltung ist es vorgesehen, eine Standfläche für ein Luftfilter anschließend an eine Ansaugöffnung auf dem Tiefziehteil vorzusehen, so daß sich das Filter zwischen dem Tiefziehteil und der Dachaußenhaut erstreckt. Es versteht sich, daß das Filter in an sich bekannter Weise oben mit einer Gummi-Dichtlippe ausgestattet sein kann.

Weitere Einzelheiten, Vorteile und Merkmale ergeben sich aus der nachfolgenden Beschreibung eines Ausführungsbeispiels anhand der Zeichnung.

Es zeigen:
- Fig. 1: eine schematische Ansicht eines Längsschnitts entlang der Linie I-I aus Fig. 3 und 4;
- Fig. 2: eine schematische Ansicht des Längsschnitts gemäß der Linie II-II aus Fig. 4;
- Fig. 3: eine Draufsicht auf die Tragstruktur zur Ausbildung einer erfindungsgemäßen Heizungs-, Belüftungs- und/oder Klimatisierungsvorrichtung für Fahrzeuge, wobei die Saugebene dargestellt ist;
- Fig. 4: eine schematische Darstellung der Druckebene der vorliegenden Ausführungsform der erfindungsgemäßen Heizungs-, Belüftungs- und/oder Klimatisierungsvorrichtung; und
- Fig. 5: ein Schnitt gemäß der Linie V-V aus Fig. 4.

Eine erfindungsgemäße Heizungs-, Belüftungs- und/oder Klimatisierungsvorrichtung 10 für Fahrzeuge weist ein Tiefziehteil 12 auf, das eine Tragstruktur 14 für ein Gebläse 16 und einen Wärmetauscher 18 der Vorrichtung 10 bildet. Das Tiefziehteil 12 ist zweischalig unter Ausbildung von Luftkanälen 20 ausgestaltet und in Doppeltiefziehtechnik hergestellt. Es besteht aus einer oberen Folie oder Platte 22 und einer unteren Folie oder Platte 24, wobei die Folien 22 und 24 teils miteinander verschweißt und teils voneinander beabstandet sind.

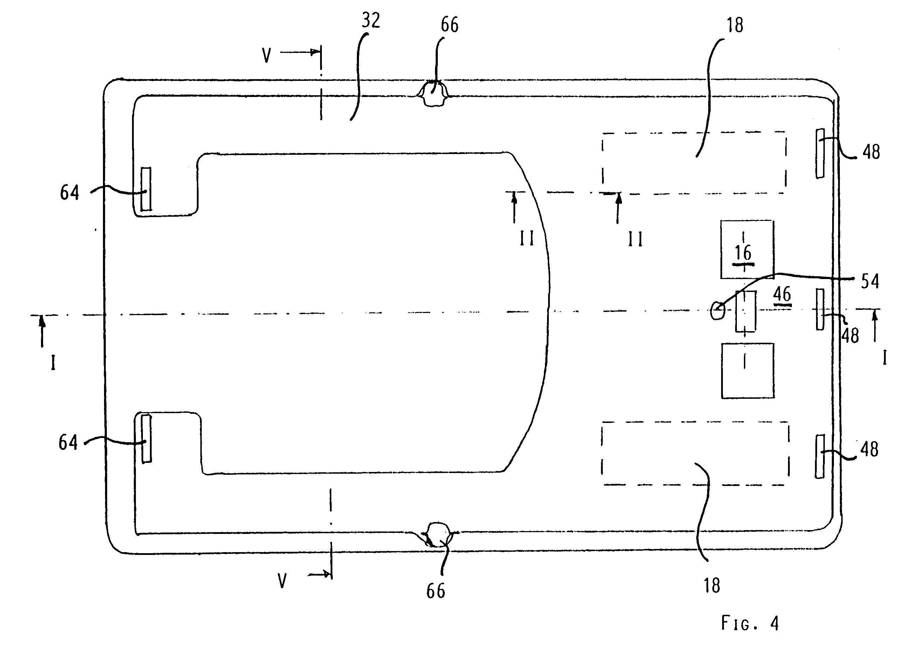

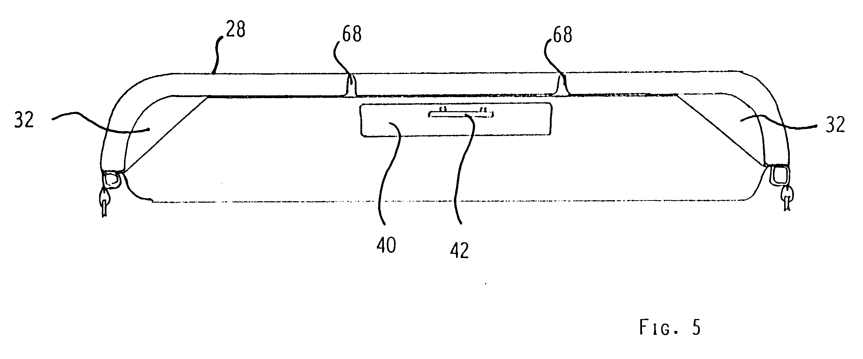

Ein Ansaugkanal 26 ist zwischen der oberen Folie 22 und einer Dachaußenhaut 28 ausgebildet und erstreckt sich vom Bereich der Kabine 30 oberhalb des Kopfes des Fahrers nach vorne. Druckseitig des Gebläses 16 erstrecken sich Luftverteilkanäle 32, die besser aus Fig. 4 ersichtlich sind. Auch in Bereichen, in denen der Ansaugkanal 26 nicht vorgesehen ist, ist die Tragstruktur 14 von der Dachaußenhaut 28 beabstandet, wie es beispielsweise aus Fig. 5 ersichtlich ist. Hiermit kann Warmluft transportiert werden, ohne daß eine Abkühlung über die kalte Dachaußenhaut 28 zu befürchten wäre.

Anschließend an eine Luftansaugöffnung 34 ist in dem Ansaugkanal 26 ein Filter 36 vorgesehen, das in der dargestellten Ausführungsform leicht schrägstehend ausgebildet ist. Das Filter 36 stützt sich auf der oberen Folie 22 ab. Diese ist an dieser Stelle von der unteren Folie 24 beabstandet und bildet eine Art Wanne für das Filter, um so die Aufnahme - beispielsweise durch Festkleben - zu erleichtern.

Demgegenüber bildet die untere Folie 24 eine Aufnahme für einen oberen rückwärtigen Querholm 38, so daß die gesamte Tragstruktur 14 auf dem Querholm abgestützt ist.

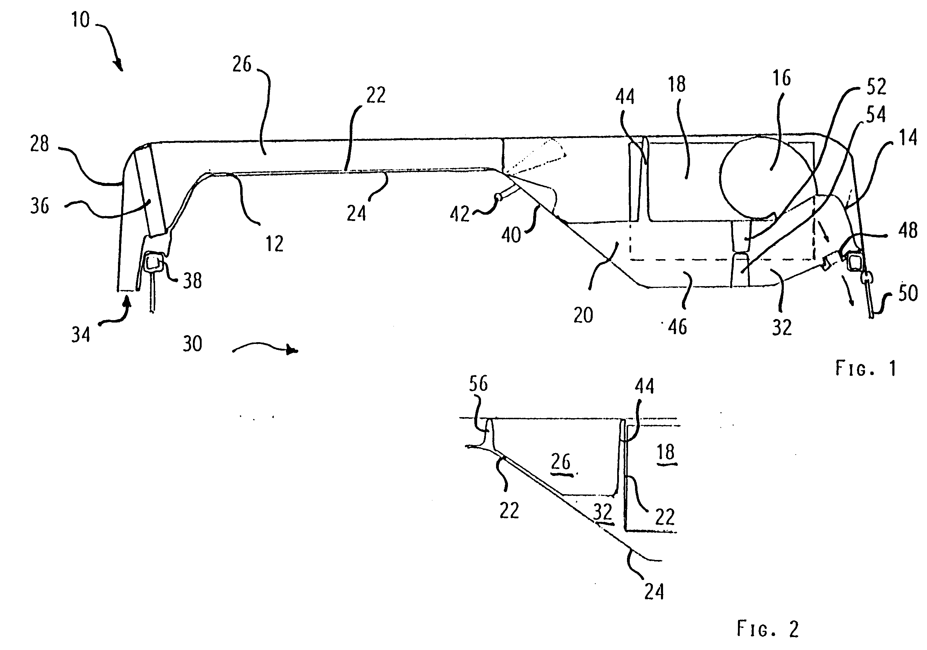

An einer im Sicht- und Griffbereich des Fahrers günstig liegenden Stelle ist eine Umschaltklappe 40 in der Tragstruktur 14 ausgebildet. Die Umschaltklappe erstreckt sich in der in Fig. 1 durchgezogen dargestellten Stellung im wesentliche schräg nach unten und gibt den Ansaugkanal 26 beim Ansaugen von Frischluft frei. Das Tiefziehteil 12 ist oben an der Umschaltklappe so gezogen, daß sich dort eine ganz geringe Wandstärke einstellt. Diese Stelle bildet ein Filmscharnier für die Umschaltklappe 40. Randseitig und unten der Umschaltklappe 40 ist das Tiefziehteil 12 ebenfalls sehr dünn gehalten. Dieser U-förmige Bereich bildet eine Soll-Bruchstelle, die beispielsweise mit einem Messer oder dergleiche geschlitzt wird, so daß die Umschaltklappe (40) es ermöglicht, in der oberen, in Fig. 1 gepunktet dargestellten Stellung die Zufuhr von Frischluft über den Ansaugkanal 26 abzusperren und anstelle dessen die Zufuhr von Umluft zu ermöglichen.

Es versteht sich, daß in geeigneter Weise eine Rastvorrichtung für die beiden möglichen Stellungen, sowie zweckmäßig ein Griff 42 vorgesehen ist.

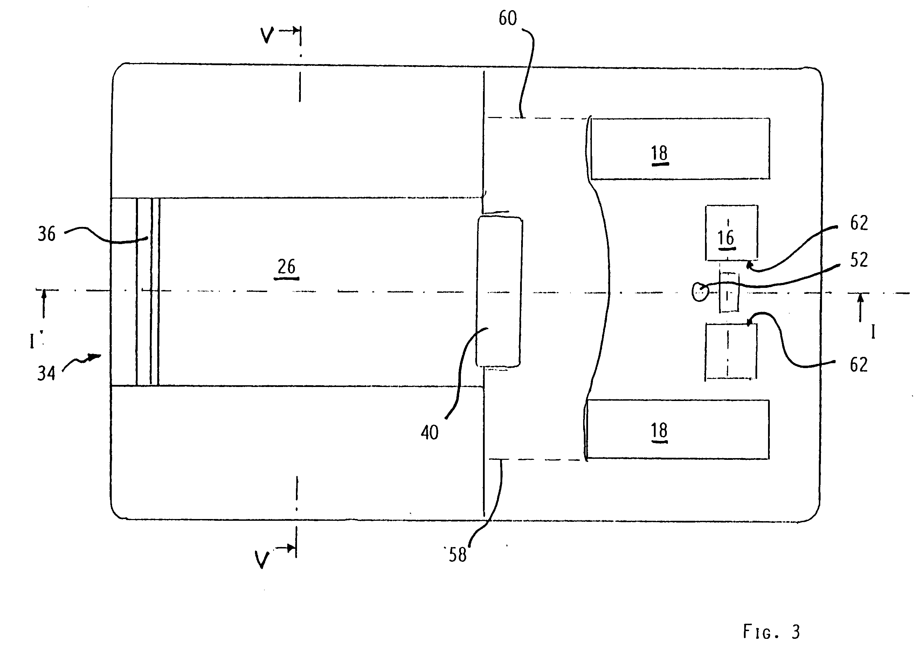

Der Ansaugkanal 26 endet nach vorne an einer ziemlich hohen Rippe 44, die sich bis zur Dachaußenhaut 28 erstreckt. An dieser Stelle ist die obere Folie 22 von der unteren Folie 24 zur Bildung eines Druckraums 46 anschließend an das Gebläse 16 beabstandet. Die Luft wird an dieser Stelle, wie es aus Fig. 3 hervorgeht, seitlich nach außen geleitet, um den Wärmetauscher 18 durchtreten zu können.

Nach Durchtreten des Gebläses 16, das bevorzugt als Doppelradialgebläse ausgebildet ist, gelangt die Luft in den Druckraum 46 der der Strömungsvergleichmäßigung dient, es bei der dargestellten Ausgestaltung aber gleichzeitig erlaubt, Warmluft mit hoher Strömungsgeschwindigkeit aus einer Düse 48 zum Defrosten der nur teilweise dargestellten Frontscheibe 50 austreten zu lassen. Hierzu ist die Düse 48 etwa in Verlängerung der Ausströmrichtung des Gebläses 16 angeordnet.

Es versteht sich, daß in der aus Fig. 4 ersichtlichen Weise mehrere Düsen 48 nebeneinander vorgesehen sind, die die Frontscheibe 50 über ihre Breite abdecken.

In einer modifizierten Ausgestaltung ist keine Düse als Einsatzteil vorgesehen, sondern eine weitere Sollbruchstelle ist in dem Tiefziehteil 12 ausgebildet, so daß ein Materialstreifen zu Bildung eines Schlitzes dort leicht entfernbar ist.

Der Druckraum 46 weist mittig einander zugewandete Vorsprünge 52 und 54 auf, die je an der oberen Folie 22 und an der unteren Folie 24 ausgebildet sind und nicht nur die Abstützung des Gebläses 16 verbessern, sondern auch etwaige Resonanzschwingungen weiter vermindern.

In Fig. 2 ist ein Schnitt entlang der Linie II-II aus Fig. 4 dargestellt. Hier wie auch in den weiteren Figuren weisen gleiche Bezugszeichen auf gleiche Teile hin. Der Ansaugkanal 26 wird von der Rippe 44 sowie einer Rippe 56 begrenzt, die je die Dachaußenhaut 28 abdichten. Zur Bildung der Rippen 44 und 56 sind die beiden Schichten oder Folien 22 und 24 der Tragstruktur je auseinandergezogen, so daß die untere Folie 24 eine geschlossene Oberfläche bietet.

Unterhalb des Ansaugkanals 26 erstreckt sich der Luftverteilkanal 32, der dort seitlich nach außen/oben geführt wird und später in den Querschnitt gemäß Fig. 5 übergeht. Es ist ersichtlich, daß die obere Folie 22 hier die Trennebene zwischen Saug- und Druckseite bildet.

Die Saugebene der erfindungsgemäßen Vorrichtung 10 ist in Fig. 3 dargestellt. In dieser Darstellung ist ersichtlich, daß sich der Ansaugkanal 26 im Bereich hinter der Umschaltklappe 40 in einen rechten und einen linken Zweig aufteilt. Dort ist die Höhe - wie aus Fig. 2 ersichtlich ist - größer, so daß die geringe Breite im Vergleich zu dem Bereich vor der Umschaltklappe 40 kompensiert wird. Die Luft wird seitlich Wärmetauschern 18 zugeführt, die in dieser Ausführungsform quer zur Fahrtrichtung eingebaut sind. Die Luft durchtritt die Wärmetauscher je von außen nach innen und gelangt in den Ansaugbereich des Gebläses 16.

In einer gegenüber der beschriebenen abgewandelten Ausgestaltung ist es vorgesehen, einen der Wärmetauscher als Verdampfer auszubilden. Hierzu sind zwei Schieber 58 und 60 in Fig. 3 schematisch angedeutet. Dann wird im Klimatisierbetrieb beispielsweise der Schieber 60 geschlossen und der Schieber 58 geöffnet, wobei der dem Schieber 58 zugeordnete Wärmetauscher 18 als Verdampfer ausgebildet ist und den Kühlbetrieb ermöglicht. Nachdem oberhalb des Gebläses 16 ein vergleichsweise großvolumiger Ansaugbereich vorgesehen ist, stellt sich dort eine gleichmäßige Temperatur ein. Eine weitere Vergleichmäßigung der Temperaturverhältnisse läßt sich erzielen, wenn lediglich dem Motor zugewandte Ansaugöffnungen 62 des Doppelradialgebläses 16 verwendet werden oder wenn ein Einfachradialgebläse verwendet wird.

Wenn umgekehrt der Heizbetrieb gewünscht ist, wird in dieser Ausgestaltung der Schieber 58 geschlossen und der Schieber 60 geöffnet.

In Fig. 4 ist eine schematische Ansicht der Druckebene der Vorrichtung 10 dargestellt. Anschließend an das Gebläse 16 ist ein großvolumiger Luftverteilraum 30 vorgesehen, der sich nach vorne über die gesamte Fahrzeugbreite erstreckt und dort in den Düsen 48 ausläuft. Nach hinten schließen sich an den Druckraum 46 gabelförmig aufgeweitet Luftverteilkanäle 32 an. Diese erstrecken sich bis in den rückwärtigen Bereich der Kabine 30 und enden dort in Düsen 64 für die Beaufschlagung der Heckscheibe.

Die Luftverteilkanäle 32 überlappen auch die B-Säulen 66 der Kabine. Diese sind oben offen gelassen, so daß Luft unmittelbar dort eintreten kann. Mit dieser Ausgestaltung ist eine Fußraumbelüftung des Fahrers mit einfachen Mitteln realisierbar.

Es versteht sich, daß in an sich bekannter Weise die A-Säulen der Kabine - auch wenn dies in den Figuren nicht dargestellt ist - für die Anschlußleitungen für den Verdampfer, den Wärmetauscher und das Gebläse sowie ggf. weitere Zusatzelemente vorgesehen sein können.

Die Darstellung gemäß Fig. 5 zeigt, daß sich die Luftverteilkanäle 32 schräg außen jedoch beabstandet von der Dachaußenhaut 28 erstrecken. In dieser Ausgestaltung ist die Kopffreiheit des Fahrers in keiner Weise beeinträchtigt. Zur Abgrenzung des Ansaugkanals 26 erstrecken sich ferner Rippen 68 parallel zur Fahrzeuglängsachse.

Es versteht sich, daß zahlreiche Modifikationen möglich sind, ohne den Bereich der Erfindung zu verlassen. Beispielsweise können die Luftführungen anders ausgestaltet sein. Auch ist es möglich, auch den Ansaugkanal zwischen Schichten eines Tiefziehteils laufen zu lassen. Gegebenenfalls kann auch eine dritte Schicht zur Trennung von zwei tiefgezogenen Schichten vorgesehen sein.

## Patentansprüche

1. Heizungs-, Belüftungs-, und/oder Klimatisierungsvorrichtung für Fahrzeuge, welche insbesondere im Dach eines Kabinenfahrzeugs angeordnet ist, mit mindestens einem Gebläse und Luftkanälen, die saugseitig (Ansaugkanäle) und/oder druckseitig (Luftverteilkanäle) des Gebläses angeordnet sind, dadurch **gekennzeichnet,** daß die Vorrichtung zweischalig in einer Doppeltiefziehtechnik hergestellte Luftkanäle (20) aufweist, die mindestens einen Teil der Luftkanäle (20) bilden.

2. Heizungs-, Belüftungs- und/oder Klimatisierungsvorrichtung nach Anspruch 1, dadurch gekennzeichnet, daß eine Tragstruktur (14) für die Abstützung des Gebläses (16) und/oder Wärmetauschers (18) und/oder Verdampfers in Doppeltiefziehtechnik zweischalig ausgebildet ist.

3. Heizungs-, Lüftungs- und Klimatisierungsvorrichtung nach einem der vorhergehenden Ansprüche, dadurch gekennzeichnet, daß mindestens ein Teil der Luftkanäle (20) in einer Tragstruktur (14) vorgesehen ist und die Tragstruktur (14) teilweise einschalig und teilweise zweischalig ausgebildet ist und in einschaligen Bereichen im wesentlichen die doppelte Wandstärke wie in zweischaligen Bereichen aufweist.

4. Heizungs-, Belüftungs- und/oder Klimatisierungsvorrichtung nach einem der vorhergehenden Ansprüche, dadurch gekennzeichnet, daß der in Doppeltiefziehtechnik gebildete Teil der Luftkanäle (20) je einen geschlossenen Raum bildet, der von dem Gebläse (16) einerseits und von Luftansaugöffnungen (34) und/oder Düsen (48, 64) andererseits begrenzt ist.

5. Heizungs-, Belüftungs- und/oder Klimatisierungsvorrichtung nach einem der vorhergehenden Ansprüche, dadurch gekennzeichnet, daß die Vorrichtung (10) aus zwei tiefziehbaren und miteinander verschweißbaren Platten oder Folien (22, 24), insbesondere aus Kunststoff, aufgebaut ist, die in voneinander beabstandeten Bereichen die Luftkanäle (20) bilden und seitlich der Luftkanäle miteinander verschweißt sind.

6. Heizungs-, Belüftungs- und/oder Klimatisierungsvorrichtung nach einem der vorhergehenden Ansprüche, dadurch gekennzeichnet, daß voneinander beabstandete Bereiche von Platten oder Folien (22, 24), die die Vorrichtung (10) bilden, sich im wesentlichen waagerecht erstrecken, wobei die Materialstärke von sich mit senkrechter Komponente erstreckenden Bereichen durch die Tiefziehtechnik reduzierbar ist.

7. Heizungs-, Belüftungs- und/oder Klimatisierungsvorrichtung nach einem der vorhergehenden Ansprüche, dadurch gekennzeichnet, daß die obere (22) der beiden Platten oder Folien (22, 24), die die Vorrichtung (10) bilden, als Tragstruktur (14) für Gebläse (16), Wärmetauscher (18) und/oder Verdampfer ausgebildet ist und saugseitige Luftkanäle (26) von druckseitigen Luftkanälen (32) trennt.

8. Heizungs-, Belüftungs- und/oder Klimatisierungsvorrichtung nach einem der vorhergehenden Ansprüche, dadurch gekennzeichnet, daß die Luftkanäle (20) einen Druckverteilraum (46) umfassen, der ausgangsseitig des Gebläses (16) vorgesehen ist und insbesondere Stütztürme (52, 54) aufweist, zu deren Ausbildung die beiden Platten oder Folien (22, 24) einander berührend aufeinander zu vorspringen.

9. Heizungs-, Belüftungs- und/oder Klimatisierungsvorrichtung nach einem der vorhergehenden Ansprüche, dadurch gekennzeichnet, daß im Kopfbereich des Fahrers des Fahrzeugs die die Vorrichtung (10) bildenden Platten oder Folien (22, 24) unter Ausbildung einer im wesentlichen waagerechten Doppelwand nach oben gezogen sind.

10. Heizungs-, Belüftungs- und/oder Klimatisierungsvorrichtung nach einem der vorhergehenden Ansprüche, dadurch gekennzeichnet, daß zwischen der oberen Platte oder Folie (22) von zwei die Vorrichtung (10) bildenden Platten oder Folien (22, 24) und einer Dachaußenhaut (28) des Fahrzeugs ein insbesondere großflächiger Ansaugkanal (26) vorgesehen ist und die obere Platte oder Folie (22) von der Dachaußenhaut (28) beabstandet ist.

11. Heizungs-, Belüftungs- und/oder Klimatisierungsvorrichtung nach einem der vorhergehenden Ansprüche, dadurch gekennzeichnet, daß in an sich bekannter Weise dachtragende Karosseriesäulen (66) für Anschlußleitungen, beispielsweise für einen Wärmetauscher (18), einen Verdampfer und elektrische Leitungen für das Gebläse (16), vorgesehen sind und insbesondere eine Karosseriesäule (66) an ihrem oberen Ende an einen Luftverteilkanal angeschlossen ist, so daß sie Luft zum Fußraum des Fahrers zu leiten vermag.

12. Heizungs-, Belüftungs- und/oder Klimatisierungsvorrichtung nach einem der vorhergehenden Ansprüche, dadurch gekennzeichnet, daß die untere Platte oder Folie (24) von zwei die Vorrichtung (10) bildenden Platten oder Folien (22, 24) mit Dämmstoff, insbesondere in Form von Weichschaum ausgestattet ist.

13. Heizungs-, Belüftungs- und/oder Klimatisierungsvorrichtung nach einem der vorhergehenden Ansprüche, dadurch gekennzeichnet, daß eine Tragstruktur (14) der Vorrichtung (10) für die Aufnahme von Bedienelementen für die Heizung und/oder Klimatisierung, sowie insbesondere für Zusatzgeräte wie Lautsprecher, Radio und ähnliche Geräte vorgesehen ist.

14. Heizungs-, Belüftungs- und/oder Klimatisierungsvorrichtung nach einem der vorhergehenden Ansprüche, dadurch gekennzeichnet, daß Markierungen für Ausstanzungen in Doppeltiefziehtechnik in der Vorrichtung (10) angebracht sind.

15. Heizungs-, Belüftungs- und/oder Klimatisierungsvorrichtung nach einem der vorhergehenden Ansprüche, dadurch gekennzeichnet, daß eine Sollbruchstelle und/oder ein Filmscharnier zur Bildung insbesondere einer Klappe (40) für die Umschaltung zwischen Frischluft und Umluft in der Vorrichtung (10) ausgebildet ist.

16. Heizungs-, Belüftungs- und/oder Klimatisierungsvorrichtung nach einem der vorhergehenden Ansprüche, dadurch gekennzeichnet, daß ein Gehäuse des Filters (36), mit welchem ein Ansaugkanal (26) abgedeckt ist, auf einer Tragstruktur (14) befestigt, insbesondere aufgeklebt ist.

## Claims

1. A heating, ventilation and/or air-conditioning apparatus for vehicles, which in particular is mounted in the roof of cab-type vehicles, having at least one blower and air ducts which are disposed on the intake side (intake ducts) and/or on the delivery side (air distribution ducts) of the blower, characterised in that the apparatus has air ducts (20) which are produced in two shells in a double deep-drawing process and which form at least part of the air ducts (20).

2. A heating, ventilation and/or air-conditioning apparatus according to Claim 1, characterised in that a support structure (14) for supporting the blower (16) and/or heat exchanger (18) and/or vaporiser is formed in two shells in a double deep-drawing process.

3. A heating, ventilation and air-conditioning apparatus according to any one of the preceding Claims, characterised in that at least part of the air ducts (20) is provided in a support structure (14) and the support structure (14) is partly of single-shell and partly of double-shell construction and in the single-shell zones has substantially double the wall thickness of that in the double-shell zones.

4. A heating, ventilation and/or air-conditioning apparatus according to any one of the preceding Claims, characterised in that the part of the air ducts (20) formed in a double deep-drawing process forms a respective closed chamber which, on the one side, is bounded by the blower (16) and, on the other side, by air-intake openings (34) and/or nozzles (48,64).

5. A heating, ventilation and/or air-conditioning apparatus according to any one of the preceding Claims, characterised in that the apparatus (10) is constructed from two panels or sheets (22,24), in particular of plastics material, which can be deep-drawn and welded together and which form the air ducts (20) in spaced apart zones and are welded together laterally of the air ducts.

6. A heating, ventilation and/or air-conditioning apparatus according to any one of the preceding Claims, characterised in that spaced apart zones of panels or sheets (22,24), which form the apparatus (10), extend substantially horizontally, wherein the material thickness of zones extending with a vertical component can be reduced by the deep-drawing process.

7. A heating, ventilation and/or air-conditioning apparatus according to any one of the preceding Claims, characterised in that the upper (22) of the two panels or sheets (22,24) which form the apparatus (10) is formed as a support structure (14) for the blower (16), heat exchanger (18) and/or vaporiser, and separates air ducts (26) on the intake side from air ducts (32) on the delivery side.

8. A heating, ventilation and/or air-conditioning apparatus according to any one of the preceding Claims, characterised in that the air ducts (20) comprise a pressure-distribution chamber (46) which is provided on the outlet side of the blower (16) and, in particular, has support turrets (52,54), for the formation of which the two panels or sheets (22,24) project so as to contact one another.

9. A heating, ventilation and/or air-conditioning apparatus according to any one of the preceding Claims, characterised in that in the head region of the driver of the vehicle the panels or sheets (22,24) forming the apparatus (10) are drawn upwards to form a substantially horizontal double wall.

10. A heating, ventilation and/or air-conditioning apparatus according to any one of the preceding Claims, characterised in that an intake duct (26), which in particular is of large area, is provided between the upper panel or sheet (22) of two panels or sheets (22,24) forming the apparatus (10) and a roof outer skin (28) of the vehicle, and the upper panel or sheet (22) is spaced apart from the roof outer skin (28).

11. A heating, ventilation and/or air-conditioning apparatus according to any one of the preceding Claims, characterised in that in per se known manner roof-supporting body pillars (66) are provided for connecting leads, for example for a heat exchanger (18), a vaporiser and electric leads for the blower (16) and, in particular, one body pillar (66) is connected at its upper end to an air-distribution duct so that it can direct air towards the driver's foot region.

12. A heating, ventilation and/or air-conditioning apparatus according to any one of the preceding Claims, characterised in that the lower panel or sheet (24) of two panels or sheets (22,24) forming the apparatus (10) is provided with insulating material, in particular in the form of soft foam.

13. A heating, ventilation and/or air-conditioning apparatus according to any one of the preceding Claims, characterised in that a support structure (14) of the apparatus (10) is provided to accommodate control elements for the heating and/or air-conditioning, and also in particular for auxiliary appliances, such as loudspeakers, radio and similar equipment.

14. A heating, ventilation and/or air-conditioning apparatus according to any one of the preceding Claims, characterised in that markings are applied for punching out in a double deep-drawing process in the apparatus (10).

15. A heating, ventilation and/or air-conditioning apparatus according to any one of the preceding Claims, characterised in that a predetermined breaking point and/or a film hinge is provided so as to form, in particular, a flap (40) for switching between fresh air and recirculated air in the apparatus (10).

16. A heating, ventilation and/or air-conditioning apparatus according to any one of the preceding Claims, characterised in that a housing of the filter (36), with which an intake duct (26) is covered, is secured to a support structure (14), in particular adhered thereto.

## Revendications

1. Dispositif de chauffage, de ventilation et/ou de climatisation pour véhicules qui est disposé en particulier dans le toit d'un véhicule à cabine, comprenant au moins un ventilateur et des canaux d'air qui sont disposés côté aspiration (canaux d'aspiration) et/ou côté refoulement (canaux de répartition d'air) du ventilateur, caractérisé en ce que le dispositif comporte des canaux d'air (20) à double paroi qui sont fabriqués par emboutissage double et forment au moins une partie des canaux d'air (20).

2. Dispositif de chauffage, de ventilation et/ou de climatisation selon la revendication 1, caractérisé en ce qu'une structure de support (14) à double paroi est réalisée par emboutissage double, pour le support du ventilateur (16) et/ou de l'échangeur de chaleur (18) et/ou de l'évaporateur.

3. Dispositif de chauffage, de ventilation et/ou de climatisation selon l'une des revendications précédentes, caractérisé en ce que au moins une partie des canaux d'air (20) est prévue dans une structure de support (14) et la structure de support (14) est en partie à une paroi et en partie à double paroi et présente dans les zones à une paroi une épaisseur de paroi qui est le double de celle existant dans les zones à double paroi.

4. Dispositif de chauffage, de ventilation et/ou de climatisation selon l'une des revendications précédentes, caractérisé en ce que la partie des canaux d'air (20) réalisée par emboutissage double forme respectivement un espace fermé qui est limité d'une part par le ventilateur (16) et d'autre part par des orifices d'aspiration d'air (34) et/ou des buses (48, 64).

5. Dispositif de chauffage, de ventilation et/ou de climatisation selon l'une des revendications précédentes, caractérisé en ce que le dispositif (10) est formé de deux plaques ou feuilles (22, 24) emboutissables et pouvant être soudées entre elles, notamment en matière plastique, qui forment les canaux d'air (20) dans des zones espacées l'une de l'autre et sont soudées entre elles sur le côté des canaux d'air.

6. Dispositif de chauffage, de ventilation et/ou de climatisation selon l'une des revendications précédentes, caractérisé en ce que des zones de plaques ou de feuilles (22, 24) espacées l'une de l'autre qui forment le dispositif (10) s'étendent sensiblement horizontalement, l'épaisseur de matériau de zones s'étendant avec une composante verticale pouvant être réduite par la technique d'emboutissage.

7. Dispositif de chauffage, de ventilation et/ou de climatisation selon l'une des revendications précédentes, caractérisé en ce que la plaque ou feuille supérieure (22) parmi les deux plaques ou feuilles (22, 24) qui forment le dispositif (10) est réalisée sous forme de structure de support (14) pour le ventilateur (16), l'échangeur de chaleur (18) et/ou l'évaporateur et sépare des canaux d'air (20) côté aspiration de canaux d'air (32) côté refoulement.

8. Dispositif de chauffage, de ventilation et/ou de climatisation selon l'une des revendications précédentes, caractérisé en ce que les canaux d'air (20) entourent une chambre de répartition de pression (46) qui est prévue sur le côté sortie du ventilateur (16) et comporte notamment des colonnes de support (52, 54) qui sont formées par des saillies des deux plaques ou feuilles (22, 24) qui sont dirigées l'une vers l'autre et se touchent.

9. Dispositif de chauffage, de ventilation et/ou de climatisation selon l'une des revendications précédentes, caractérisé en ce que dans la région de la tête du conducteur du véhicule, les plaques ou feuilles (22, 24) formant le dispositif (10) sont tirées vers le haut en formant une double paroi sensiblement horizontale.

10. Dispositif de chauffage, de ventilation et/ou de climatisation selon l'une des revendications précédentes, caractérisé en ce qu'un canal d'aspiration (26) en particulier de grande surface est prévu entre la plaque ou feuille supérieure (22) de deux plaques ou feuilles (22, 24) formant le dispositif (10) et un panneau extérieur de toit (28) du véhicule et la plaque ou feuille supérieure (22) se trouve à distance du panneau extérieur de toit (28).

11. Dispositif de chauffage, de ventilation et/ou de climatisation selon l'une des revendications précédentes, caractérisé en ce que des colonnes de carrosserie (66) supportant le toit sont prévues de manière connue pour des conduites de raccordement, par exemple pour un échangeur de chaleur (18), un évaporateur et pour des lignes électriques pour le ventilateur (16) et en particulier une colonne de carrosserie (66) est raccordée à son extrémité supérieure à un canal de répartition d'air de telle sorte qu'elle peut amener de l'air vers les pieds du conducteur.

12. Dispositif de chauffage, de ventilation et/ou de climatisation selon l'une des revendications précédentes, caractérisé en ce que la plaque ou feuille inférieure (24) de deux plaques ou feuilles (22, 24) formant le dispositif (10) est équipée de matériau isolant, en particulier sous forme de mousse souple.

13. Dispositif de chauffage, de ventilation et/ou de climatisation selon l'une des revendications précédentes, caractérisé en ce qu'une structure de support (14) du dispositif (10) est prévue pour recevoir des éléments de commande du chauffage et/ou de la climatisation ainsi qu'en particulier pour des accessoires tels que haut-parleurs, radio et autres.

14. Dispositif de chauffage, de ventilation et/ou de climatisation selon l'une des revendications précédentes, caractérisé en ce que des repères sont ménagés dans le dispositif (10) pour des découpages par emboutissage double.

15. Dispositif de chauffage, de ventilation et/ou de climatisation selon l'une des revendications précédentes, caractérisé en ce qu'un point destiné à la rupture et/ou une charnière-film est réalisé(e) dans le dispositif (10) pour former en particulier un clapet (40) destiné à la commutation entre air frais et air de circulation.

16. Dispositif de chauffage, de ventilation et/ou de climatisation selon l'une des revendications précédentes, caractérisé en ce qu'un boîtier du filtre (36), avec lequel est recouvert un canal d'aspiration (26), est fixé, en particulier collé, sur une structure de support (14).
